# EUROPEAN PATENT APPLICATION

(11) **EP 4 566 837 A1**
(43) Date of publication of application: **11.06.2025**
(21) Application number: 24212258.8
(22) Date of filing: 12.11.2024
(51) Int. Cl.: B60C 1/00, C08C 19/22, C08C 19/25, C08F 236/10, C08L 15/00

(54) **TIRE**

(30) Priority: 05.12.2023 JP 2023205407
(71) Applicant: Sumitomo Rubber Industries, Ltd., Kobe-shi, Hyogo-ken 651-0072 (JP)
(72) Inventor: SUZUKI, Yumi, Kobe-shi, 651-0072 (JP)
(74) Representative: Manitz Finsterwald Patent- und Rechtsanwaltspartnerschaft mbB

(57) **Abstract**

Provided is a tire having excellent overall performance in terms of fuel economy and abrasion resistance. The tire includes a cap tread containing a rubber component and sulfur, the cap tread containing a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component, the cap tread having a thickness T of less than 10.5 mm, the cap tread having a ratio (SWELL/(Sc × T)) of SWELL (%) of the cap tread to a value of "the amount Sc (parts by mass) of the sulfur per 100 parts by mass of the rubber component × the thickness T (mm) of the cap tread" of 21 or higher.

## Description

### TECHNICAL FIELD

The present invention relates to tires.

### BACKGROUND ART

From the perspective of recent environmental considerations, tires have been required to have higher performances including fuel economy and abrasion resistance.

### SUMMARY OF INVENTION

### TECHNICAL PROBLEM

However, since fuel economy and abrasion resistance are generally contradictory to each other, well-balanced improvement of these performances is difficult to achieve.

The present invention aims to solve the problem and provide a tire having excellent overall performance in terms of fuel economy and abrasion resistance.

### SOLUTION TO PROBLEM

The present invention relates to a tire, including a cap tread containing a rubber component and sulfur,
the cap tread containing a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component,
the cap tread having a thickness T of less than 10.5 mm,
the cap tread having a ratio (SWELL/(Sc × T)) of SWELL (%) of the cap tread to a value of "the amount Sc (parts by mass) of the sulfur per 100 parts by mass of the rubber component × the thickness T (mm) of the cap tread" of 21 or higher.

### ADVANTAGEOUS EFFECTS OF INVENTION

The present invention provides a tire including a cap tread containing a rubber component and sulfur, the cap tread containing a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component, the cap tread having a thickness T of less than 10.5 mm, the cap tread having a ratio (SWELL/(Sc × T)) of SWELL (%) of the cap tread to a value of "the amount Sc (parts by mass) of the sulfur per 100 parts by mass of the rubber component × the thickness T (mm) of the cap tread" of 21 or higher. This tire has excellent overall performance in terms of fuel economy and abrasion resistance.

### BRIEF DESCRIPTION OF DRAWINGS

FIG. 1 is a cross-sectional view showing a part of a pneumatic tire.
FIG. 2 is an enlarged cross-sectional view showing a tread and its vicinity of the tire in FIG. 1.

### DESCRIPTION OF EMBODIMENTS

The tire includes a cap tread containing a rubber component and sulfur. The cap tread contains a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component. The cap tread has a thickness T of less than 10.5 mm. The cap tread has a ratio (SWELL/(Sc × T)) of SWELL (%) of the cap tread to a value of "the amount Sc (parts by mass) of the sulfur per 100 parts by mass of the rubber component × the thickness T (mm) of the cap tread" of 21 or higher.

The reason for the advantageous effect of the tire described above is not exactly clear, but it is presumably as follows.

A low fuel consumption formulation is usually obtained by reducing the amount of fillers. However, since this technique reduces reinforcement, it is usually difficult to achieve both fuel economy and abrasion resistance by the technique.

Fuel economy and abrasion resistance are difficult to achieve simultaneously through a change in the cross-linking density by simply changing the amount of sulfur. This may be because an increase in the amount of sulfur increases the cross-linking density and reduces energy loss but reduces elongation, thereby deteriorating abrasion resistance. Elongation can be achieved by reducing the amount of sulfur; however, reduced sulfur leads to an increase in energy loss. Thus, fuel economy tends to deteriorate.

A thinner tread is lighter and is advantageous to improve fuel economy. Yet, since a tire with a thinner tread has a shorter life, a formulation with good abrasion resistance needs to be used in combination. Fuel economy and abrasion resistance are difficult to achieve simultaneously.

In the above-described tire, for example, addition of peroxide to the formulation with a small amount of sulfur causes binding of polymer chains with each other. In this case, energy loss is less likely to occur compared to sulfur cross-linking. Thus, presumably, fuel economy may improve.

Further, the concomitant use of the styrene-butadiene rubber having a low styrene content, i.e., a low Tg styrene-butadiene rubber reduces the steric hindrance of the styrene unit, thereby increasing cross-linking efficiency. Thus, energy loss can be further reduced.

The combination of the styrene-butadiene rubber having a low styrene content with a small amount of sulfur allows the addition of a large amount of fillers, which enables achievement of both fuel economy and abrasion resistance.

Presumably, overall performance in terms of fuel economy and abrasion resistance can be improved by the combination of the styrene-butadiene rubber having a low styrene content with a small amount of sulfur, together with the cap tread that has a predetermined thickness or less and has a predetermined ratio (SWELL/(Sc × T)) or higher of the SWELL of the cap tread to the value of "the amount Sc of sulfur × the thickness T of the cap tread".

As discussed above, the tire solves the problem (aim) in improving overall performance in terms of fuel economy and abrasion resistance due to the structure satisfying the relationship "SWELL/(Sc × T) is 21 or higher". In other words, the parameter of "SWELL/(Sc × T) is 21 or higher" does not define the problem (aim). The problem herein is to improve overall performance in terms of fuel economy and abrasion resistance. In order to solve the problem, the tire has been formulated to satisfy the parameter.

The tire includes a cap tread.

The cap tread is formed of a cap tread rubber composition.

Herein, the term "cap tread" refers to a rubber layer defining the outermost surface layer in the tire radial direction among rubber layers constituting a tread. In a monolayer tread, the monolayer tread itself corresponds to a cap tread. In a two-layered tread consisting of a cap tread and a base tread, a rubber layer defining the surface layer corresponds to a cap tread. In a tread including three or more layers, a rubber layer defining the outermost layer corresponds to a cap tread.

Chemicals usable in the cap tread rubber composition are described below.

The cap tread rubber composition contains a rubber component.

The rubber component contributes to cross-linking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The cap tread rubber component usable in the rubber composition may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The cap tread rubber composition contains a styrene-butadiene rubber having a styrene content of 20% by mass or lower as a rubber component.

Non-limiting examples of usable styrene-butadiene rubbers having a styrene content of 20% by mass or lower (hereinafter, also referred to as SBR having a low styrene content) include emulsion-polymerized styrene-butadiene rubbers (E-SBR) and solution-polymerized styrene-butadiene rubbers (S-SBR).

The SBR having a low styrene content has a styrene content of 20% by mass or lower, preferably 15% by mass or lower, more preferably 12% by mass or lower, particularly preferably 10% by mass or lower. The lower limit of the styrene content is preferably 3% by mass or higher, more preferably 5% by mass or higher, still more preferably 6% by mass or higher. When the styrene content is within the range indicated above, the advantageous effect tends to be better achieved.

Herein, the styrene content can be measured by ¹H-NMR analysis.

The SBR having a low styrene content has a vinyl content of preferably 20% by mass or higher, more preferably 30% by mass or higher, still more preferably 350 by mass or higher, further preferably 40% by mass or higher. The upper limit of the vinyl content is preferably 55% by mass or lower, more preferably 52% by mass or lower, still more preferably 50% by mass or lower. When the vinyl content is within the range indicated above, the advantageous effect tends to be better achieved.

Herein, the vinyl content (1,2-butadiene unit content) can be measured by infrared absorption spectrometry.

The SBR having a low styrene content has a weight average molecular weight (Mw) of preferably 100000 or more, more preferably 150000 or more, still more preferably 200000 or more. The Mw is preferably 700000 or less, more preferably 400000 or less, still more preferably 350000 or less, further preferably 300000 or less. When the Mw is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

In the cap tread rubber composition, the amount Lc of the SBR having a low styrene content based on 100% by mass of the rubber component is 5% by mass or more and 100% by mass or less. The lower limit of the amount Lc is preferably 50% by mass or more, more preferably 70% by mass or more, still more preferably 75% by mass or more. The upper limit is preferably 90% by mass or less, more preferably 85% by mass or less, still more preferably 80% by mass or less. When the amount Lc is within the range indicated above, the advantageous effect tends to be better achieved.

The cap tread rubber composition may contain a rubber component that is different from the SBR having a low styrene content.

Examples of the different rubber component include diene-based rubbers. Examples of diene-based rubbers include an isoprene-based rubber, polybutadiene rubber (BR), styrene-butadiene rubber (SBR) that is different from the SBR having a low styrene content, styrene-isoprene-butadiene rubber (SIBR), ethylene-propylene-diene rubber (EPDM), chloroprene rubber (CR), and acrylonitrile-butadiene rubber (NBR). Examples of the different rubber component also include butyl-based rubbers and fluororubbers. Each of these may be used alone, or two or more of these may be used in combination. Modified or hydrogenated products of these rubber components are also usable. Rubbers extended with oils, resins, liquid rubber components, etc. are usable as well. The rubber component preferably includes at least one of an isoprene-based rubber and BR, more preferably includes BR.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

The amount of an isoprene-based rubber, if present, in the cap tread rubber composition based on 100% by mass of the rubber component is preferably 5% by mass or more, more preferably 10% by mass or more, still more preferably 15% by mass or more, while it is preferably 30% by mass or less, more preferably 25% by mass or less, still more preferably 20% by mass or less. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher, still more preferably 97% by mass of higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either unmodified or modified BR. Examples of the modified BR include those into which the functional groups listed for the modified rubbers have been introduced. The BR may also be hydrogenated polybutadiene polymers (hydrogenated BR).

The amount of BR based on 100% by mass of the rubber component in the cap tread rubber composition is preferably 5% by mass or more, more preferably 10% by mass or more, still more preferably 15% by mass or more, while it is preferably 50% by mass or less, more preferably 40% by mass or less, still more preferably 30% by mass or less. When the amount is within the range indicated above, the advantageous effect tends to be suitably achieved.

The materials (monomers) of synthetic rubbers such as SBR and BR may be derived from petroleum or may be recycled from rubber products such as tires or non-rubber products such as polystyrene. Non-limiting examples of monomers obtained by recycle (recycled monomers) include butadiene derived from recycled materials and aromatic vinyls derived from recycled materials. Examples of the butadiene include 1,2-butadiene and 1,3-butadiene. Non-limiting examples of the aromatic vinyls include styrene. Of these, butadiene derived from recycled materials (recycled butadiene) and/or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

The raw materials (monomers) of a synthetic rubber such as SBR or BR may be derived from biomass. Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these. Examples of the biomass resources of the monomers include sugar, wood, plant residues after collecting useful components, plant-derived ethanol, and biomass naphtha.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the ¹⁴C content of a sample to the ¹⁴C content of a modern carbon standard (modern standard reference). This value is used as an index indicative of the biomass ratio of a compound (rubber). The following will describe what this value means.

One mole of carbon atoms (6.02 × 10²³ carbon atoms) includes about 6.02 × 10^{11 14}C atoms (about one trillionth of the number of normal carbon atoms). ¹⁴C is called a radioactive isotope and its half-life period is 5730 years and the number thereof regularly decreases. Decay of all the ¹⁴C atoms requires 226000 years. This means that in the fossil fuels, such as coal, petroleum, and natural gas, which are considered to be left for at least 226000 years after carbon dioxide and the like in the air were taken into and fixed in plants, etc., all the ¹⁴C atoms which had been contained in the plants etc. at the beginning of the fixation were decayed. Therefore, in the current 21st century, the fossil fuels, such as coal, petroleum, and natural gas, contain no ¹⁴C atoms. Thus, chemical materials prepared from such fossil fuel raw materials contain no ¹⁴C atoms either.

Meanwhile, ¹⁴C is unceasingly generated by nuclear reaction of cosmic rays in the air, and this generation balances with the ¹⁴C reduction due to radioactive decay. Thus, in the global atmosphere, the amount of ¹⁴C is constant. Then, the ¹⁴C content of materials derived from biomass resources which are circulating in the current environment is about 1 × 10⁻¹² mol% of the total of C atoms as described above. Therefore, a difference in the values can be used to calculate the percentages (biomass ratios) of compounds derived from natural resources (compounds derived from biomass resources) in a compound (rubber).

The amount of ¹⁴C is generally determined as follows. ¹³C content (¹³C/¹²C) and ¹⁴C content (¹⁴C/¹²C) are determined by tandem accelerator-based mass spectrometry. In the determination, the ¹⁴C content of the natural carbon cycle at 1950 is used as a modern standard reference, that is, a standard ¹⁴C content. The particular standard substance used is an oxalic acid standard offered by the National Institute of Standards and Technology (NIST), United States. The specific radioactivity of carbon (intensity of radioactivity of ¹⁴C per gram of carbon) in the oxalic acid is corrected for carbon isotopic fractionation to a certain value for ¹³C, and is then corrected for decay between 1950 AD and the measurement date. This corrected value is taken as the standard ¹⁴C content (100%). The ratio between this value and the actual measurement value of a sample is defined as pMC.

Thus, a rubber 100% produced from materials derived from biomass (natural materials) is expected to have about 110 pMC although there are some differences such as regional differences (currently, such materials often fail to exhibit a value of 100 in usual conditions). On the other hand, the measured ¹⁴C content of chemical materials derived from fossil fuels, such as petroleum, is expected to be substantially 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

The cap tread rubber composition contains sulfur.

The amount Sc of the sulfur per 100 parts by mass of the rubber component in the cap tread rubber composition is 0.5 parts by mass or more, preferably 0.6 parts by mass or more, more preferably 0.7 parts by mass or more, still more preferably 0.8 parts by mass or more. The amount is 1.5 parts by mass or less, preferably 1.3 parts by mass or less, more preferably 1.1 parts by mass or less, still more preferably 1.0 parts by mass or less. When the amount Sc is within the range indicated above, the advantageous effect tends to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone, or two or more of these may be used in combination.

To better achieve the advantageous effect, the cap tread rubber composition desirably contains an organic peroxide.

The mechanism of the enhancement of the advantageous effect provided by the presence of the organic peroxide is not clear. Presumably, the organic peroxide binds polymer chains with each other, so that energy loss is less likely to occur. This may improve fuel economy, and thus overall performance in terms of fuel economy and abrasion resistance may improve.

Examples of the organic peroxide include organic peroxides represented by the formula: R¹-O-O-R² wherein R¹ and R² are the same or different and each represent a hydrogen atom or an organic group. Non-limiting examples of the organic group include a monovalent hydrocarbon group optionally having a known substituent, such as linear, branched, or cyclic hydrocarbon groups (e.g., aliphatic hydrocarbon groups, alicyclic hydrocarbon groups, and aromatic hydrocarbon groups). The number of carbon atoms of the organic group is preferably 4 or more, more preferably 5 or more, still more preferably 9 or more, while it is preferably 15 or less, more preferably 13 or less. Non-limiting examples of the substituent include an amino group, an amide group, a hydroxyl group, a sulfide group, an epoxy group, a tin-containing group, an alkoxysilyl group, a silanol group, a carbonyl group, a carboxyl group, a thiocarbonyl group, an ammonium group, a nitrile group, and an imine group.

Examples of the organic peroxide include acyl peroxides such as benzoyl peroxide, dibenzoyl peroxide, and p-chlorobenzoyl peroxide; peroxy esters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; dicumyl peroxide; and t-butylcumyl peroxide. To better achieve the advantageous effect, dicumyl peroxide and t-butylcumyl peroxide are preferred, with dicumyl peroxide being more preferred among these.

The amount of the organic peroxide per 100 parts by mass of the rubber component in the cap tread rubber composition is preferably 0.5 parts by mass or more, more preferably 0.8 parts by mass or more, still more preferably 1.0 parts by mass or more. The amount is preferably 8.0 parts by mass or less, more preferably 5.0 parts by mass or less, still more preferably 3.0 parts by mass or less, further preferably 1.2 parts by mass or less. When the amount is within the range indicated above, the advantageous effect tends to be better achieved. The amount of dicumyl peroxide is desirably also within the range indicated above.

The cap tread rubber composition desirably contains a filler.

Any filler may be used, including materials known in the rubber field. Examples include inorganic fillers such as carbon black, silica, calcium carbonate, talc, alumina, clay, aluminum hydroxide, aluminum oxide, and mica; bio char, and hard-to-disperse fillers. To better achieve the advantageous effect, carbon-derived fillers (carbon-containing fillers) such as carbon black and silica are preferred among these.

The amount Fc of a filler (total amount of fillers such as silica and carbon black) per 100 parts by mass of the rubber component in the cap tread rubber composition is preferably 70 parts by mass or more, more preferably 75 parts by mass or more, still more preferably 80 parts by mass or more, further preferably 90 parts by mass or more, particularly preferably 95 parts by mass or more, while it is preferably 250 parts by mass or less, more preferably 200 parts by mass or less, still more preferably 150 parts by mass or less. When the amount Fc is within the range indicated above, the advantageous effect tends to be better achieved.

The mechanism of the enhancement of the advantageous effect provided by the presence of a predetermined amount or more, particularly 90 parts by mass or more of fillers is not clear. Presumably, a combination of the styrene-butadiene rubber having a low styrene content with a small amount of sulfur can reduce energy loss. This allows addition of a large amount of fillers to increase elongation, so that abrasion resistance can be improved. Thus, presumably, overall performance in terms of fuel economy and abrasion resistance may improve.

Non-limiting examples of carbon black usable in the cap tread rubber composition include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, Nippon Steel Carbon Co., Ltd., Columbia Carbon, etc. Each of these may be used alone, or two or more of these may be used in combination. In addition to the conventional carbon black made from mineral oils or the like, carbon black made from biomass materials such as lignin is also usable. Moreover, the carbon black may be appropriately replaced with an equivalent amount of recycled carbon black produced by decomposing rubber or plastic products containing carbon black, such as tires.

The amount of carbon black per 100 parts by mass of the rubber component in the cap tread rubber composition is preferably 1 part by mass or more, more preferably 3 parts by mass or more, still more preferably 5 parts by mass or more, while it is preferably 15 parts by mass or less, more preferably 10 parts by mass or less, still more preferably 8 parts by mass or less. When the amount is within the range indicated above, the advantageous effect tends to be better achieved.

The nitrogen adsorption specific surface area (N₂SA) of the carbon black is preferably 5 m²/g or more, more preferably 10 m²/g or more, still more preferably 15 m²/g or more. The N₂SA is preferably 150 m²/g or less, more preferably 130 m²/g or less, still more preferably 120 m²/g or less, further preferably 114 m²/g or less. When the N₂SA is within the range indicated above, the advantageous effect tends to be better achieved.

The nitrogen adsorption specific surface area of the carbon black is measured in accordance with JIS K 6217-2:2001.

The carbon black has a dibutyl phthalate oil absorption (DBP oil absorption) of preferably 40 mL/100 g or more, more preferably 60 mL/100 g or more, still more preferably 70 mL/100 g or more. The DBP is preferably 200 mL/100 g or less, more preferably 150 mL/100 g or less, still more preferably 100 mL/100 g or less. When the DBP oil absorption is within the range indicated above, the advantageous effect tends to be better achieved.

The DBP of the carbon black can be determined in accordance with JIS K 6217-4:2001.

Non-limiting examples of silica usable in the cap tread rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, etc.).

Amorphous silica extracted from husks may be commercially available from Wilmar, etc.

The amount of silica per 100 parts by mass of the rubber component in the cap tread rubber composition is preferably 70 parts by mass or more, more preferably 80 parts by mass or more, still more preferably 90 parts by mass or more, while it is preferably 200 parts by mass or less, more preferably 150 parts by mass or less, still more preferably 120 parts by mass or less. When the amount is within the range indicated above, the advantageous effect tends to be better achieved.

The mechanism of the enhancement of the advantageous effect provided by the presence of a predetermined amount or more, particularly 80 parts by mass or more of silica is not clear. Presumably, a combination of the styrene-butadiene rubber having a low styrene content with a small amount of sulfur can reduce energy loss. This allows addition of a large amount of silica to increase elongation, so that abrasion resistance can be improved. Thus, presumably, overall performance in terms of fuel economy and abrasion resistance may improve.

The nitrogen adsorption specific surface area (N₂SA) of the silica is preferably 50 m²/g or more, more preferably 100 m²/g or more, still more preferably 150 m²/g or more, further preferably 175 m²/g or more. The upper limit of the N₂SA of the silica is not limited, and it is preferably 350 m²/g or less, more preferably 300 m²/g or less, still more preferably 250 m²/g or less. When the N₂SA is within the range indicated above, the advantageous effect tends to be better achieved.

Here, the N₂SA of silica is measured by a BET method in accordance with ASTM D3037-93.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 µm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of hard-to-disperse fillers, if present, in the cap tread rubber composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The cap tread rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. Each of these may be used alone, or two or more of these may be used in combination. To better achieve the advantageous effect, mercapto silane coupling agents such as silane coupling agents having mercapto groups and silane coupling agents having protected mercapto groups are preferred among these.

The amount of silane coupling agents per 100 parts by mass of the silica in the cap tread rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The amount of mercapto silane coupling agents is desirably also within the range indicated above.

The cap tread rubber composition desirably contains a plasticizer.

Herein, the term "plasticizer" refers to a material that imparts plasticity to rubber components and conceptually includes both liquid (in a liquid state) plasticizers that are liquid at room temperature (25°C) and solid plasticizers that are solid at room temperature (25°C). Examples of the plasticizer include resin components, oils, liquid polymers, and ester plasticizers. These plasticizers may be derived from petroleum, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of oils include process oils, plant oils, and animal oils. Examples of process oils include paraffinic process oils (mineral oils), naphthenic process oils, and aromatic process oils. Specific examples of process oils include mild extracted solvates (MES), distillate aromatic extracts (DAE), treated distillate aromatic extracts (TDAE), treated residual aromatic extracts (TRAE), and residual aromatic extracts (RAE). For environmental protection, process oils with a low polycyclic aromatic compound (PCA) content may be used. Examples of the process oils with a low PCA content include MES, TDAE, and heavy naphthenic oils. In view of life cycle assessment, oils obtained by purifying waste oils used in rubber mixing machines or engines or waste cooking oils used in cooking establishments may be used.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether a rubber composition contains the acylglycerol may be examined by any method such as ¹H-NMR analysis. For example, a rubber composition containing triacylglycerol is immersed in deuterium chloroform at room temperature (25°C) for 24 hours. After removing the rubber composition, the ¹H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, etc. to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, etc.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably 1.0 × 10³ to 5.0 × 10⁴, more preferably 3.0 × 10³ to 1.5 × 10⁴ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Aromatic vinyl polymers, petroleum resins, terpene resins, and hydrogenated products of these polymers and resins are desirable, and aromatic vinyl polymers and hydrogenated products thereof are more desirable among these.

The softening point of the resins that are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins that are liquid at room temperature is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

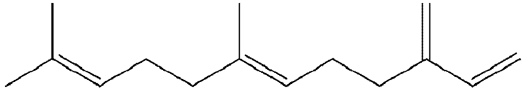

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers that are liquid at room temperature (25°C) are desirable.

The amount of plasticizers (total amount of plasticizers) per 100 parts by mass of the rubber component in the cap tread rubber composition is preferably 20 parts by mass or more, more preferably 30 parts by mass or more, still more preferably 35 parts by mass or more, further preferably 40 parts by mass or more. The upper limit is preferably 100 parts by mass or less, more preferably 70 parts by mass or less, still more preferably 50 parts by mass or less. When the amount is within the range indicated above, the advantageous effect tends to be better achieved.

The amount of plasticizers includes the amount of oils or resins contained in oil-extended rubbers or resin-extended rubbers.

The mechanism of the enhancement of the advantageous effect provided by the presence of a predetermined amount or more, particularly 35 parts by mass or more of plasticizers is not clear. Presumably, a combination of the styrene-butadiene rubber having a low styrene content with a small amount of sulfur can reduce energy loss. This allows addition of a large amount of plasticizers to increase elongation, so that abrasion resistance can be improved. Thus, presumably, overall performance in terms of fuel economy and abrasion resistance may improve.

The amount of solid plasticizers that are solid at room temperature (25°C) per 100 parts by mass of the rubber component in the cap tread rubber composition is preferably 10 parts by mass or more, more preferably 15 parts by mass or more, still more preferably 20 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

The amount of the resins that are solid at room temperature (25°C) and the amount of the aromatic vinyl polymers that are solid at room temperature (25°C) are desirably also within the range indicated above.

The amount of liquid plasticizers that are liquid at room temperature (25°C) per 100 parts by mass of the rubber component in the cap tread rubber composition is preferably 10 parts by mass or more, more preferably 15 parts by mass or more, still more preferably 20 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amount of oils that are liquid at room temperature (25°C) is desirably also within the range indicated above.

In view of crack resistance, ozone resistance, etc., the cap tread rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in the cap tread rubber composition is preferably 0.2 parts by mass or more, more preferably 2.0 parts by mass or more, still more preferably 3.0 parts by mass or more. The amount is preferably 7.0 parts by mass or less, more preferably 5.0 parts by mass or less.

The cap tread rubber composition preferably contains stearic acid.

The amount of stearic acid per 100 parts by mass of the rubber component in the cap tread rubber composition is preferably 0.5 parts by mass or more, more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The cap tread rubber composition preferably contains zinc oxide.

The amount of zinc oxide per 100 parts by mass of the rubber component in the cap tread rubber composition is preferably 0.5 parts by mass or more, more preferably 2.0 parts by mass or more, while it is preferably 5.0 parts by mass or less, more preferably 3.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The cap tread rubber composition may contain wax.

The amount of wax per 100 parts by mass of the rubber component in the cap tread rubber composition is preferably 1.0 parts by mass or more, more preferably 1.5 parts by mass or more, while it is preferably 10.0 parts by mass or less, more preferably 2.0 parts by mass or less.

The wax is not limited. Any wax usually used in the tire industry may be suitably used. Examples include petroleum waxes, mineral waxes, synthetic waxes, and plant-derived waxes. Petroleum waxes and plant-derived waxes are preferred, with petroleum waxes being more preferred. Examples of plant-derived waxes include rice waxes, carbana waxes, and candelilla waxes. Examples of petroleum waxes include paraffin waxes and microcrystalline waxes as well as selected special waxes thereof. Paraffin waxes are preferred. According to the present embodiments, waxes do not include stearic acid. Usable commercial products of waxes are available from Ouchi Shinko Chemical Industrial Co., Ltd., Nippon Seiro Co., Ltd., Paramelt, etc. Each of these waxes may be used alone, or two or more of these may be used in combination.

The cap tread rubber composition preferably contains vulcanization accelerators.

The amount of vulcanization accelerators in the cap tread rubber composition is not limited and may be freely determined according to the desired curing rate and cross-linking density. Still, the amount per 100 parts by mass of the rubber component is preferably 1.0 parts by mass or more, more preferably 3.0 parts by mass or more, still more preferably 3.5 parts by mass or more. The upper limit is preferably 8.0 parts by mass or less, more preferably 7.0 parts by mass or less, still more preferably 6.0 parts by mass or less, further preferably 5.5 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Sulfenamide vulcanization accelerators, guanidine vulcanization accelerators, and benzothiazole vulcanization accelerators are preferred among these.

In addition to the above-described components, the cap tread rubber composition may appropriately contain agents commonly used in the tire industry such as releasing agents or other materials.

Herein, various materials containing carbon atoms (for example, rubbers, oils, resins, vulcanization accelerators, antioxidants, surfactants, etc.) may be derived from carbon dioxide in the air. The materials may be obtained from carbon dioxide by directly converting carbon dioxide or by synthesizing methane from carbon dioxide through methanation and then converting the methane.

The cap tread rubber composition can be produced by, for example, kneading the above-described components using a rubber mixing machine such as an open roll mill or a Banbury mixer and then, for example, cross-linking the kneaded mixture to obtain a cross-linked rubber composition.

The kneading conditions are as follows. In a base kneading step of kneading additives other than cross-linking agents (vulcanizing agents) and vulcanization accelerators, the kneading temperature is preferably 100°C or higher, more preferably 120°C or higher, while it is preferably 180°C or lower, more preferably 170°C. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

The cap tread rubber composition is for use in a cap tread among tire components.

The tire is produced using the cap tread rubber composition by a usual method. Specifically, the rubber composition containing necessary additives before vulcanization is extruded and processed into the shape of a tire component such as a cap tread and then molded on a tire building machine by a usual method. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, etc.

The tire includes a cap tread formed of the cap tread rubber composition.

The tire has a ratio (SWELL/(Sc × T)) of the SWELL (%) of the cap tread (a vulcanized product of the cap tread rubber composition) to the value of "the amount Sc (parts by mass) of the sulfur per 100 parts by mass of the rubber component in the cap tread rubber composition × the thickness T (mm) of the cap tread" of 21 or higher.

The ratio (SWELL/(Sc × T)) is preferably 22 or higher, more preferably 23 or higher, still more preferably 24 or higher. The upper limit of the ratio (SWELL/(Sc × T)) is preferably 40 or lower, more preferably 35 or lower, still more preferably 30 or lower. When the ratio is within the range indicated above, the advantageous effect tends to be better achieved.

The mechanism of the enhancement of the advantageous effect provided by controlling the ratio (SWELL/(Sc × T)) to be a predetermined value or higher, particularly 22 or higher is not clear. Presumably, a synergistic effect of the increased elongation due to the small amount of sulfur and improved fuel economy due to the thin and light cap tread may improve overall performance in terms of fuel economy and abrasion resistance.

The SWELL of the cap tread (a vulcanized product of the cap tread rubber composition) is preferably 250% or less, more preferably 235% or less, still more preferably 230% or less, further preferably 228% or less. The lower limit of the SWELL is preferably 200% or more, more preferably 210% or more, still more preferably 211% or more, further preferably 213% or more, further preferably 215% or more, further preferably 216% or more, further preferably 218% or more, further preferably 220% or more. When the SWELL is within the range indicated above, the advantageous effect tends to be better achieved.

Here, a smaller SWELL means a higher cross-linking density.

The SWELL is a value measured by the method described later in EXAMPLES.

The SWELL may be controlled by any method. For example, the SWELL can be increased by reducing the amount of the sulfur or the amount of vulcanization accelerators, increasing the amount of softeners, reducing the amount of reinforcing agents, increasing the amount of plasticizers, or increasing the iodine values of plasticizers. The SWELL can be reduced by increasing the amount of the sulfur or the amount of vulcanization accelerators, reducing the amount of softeners, increasing the amount of reinforcing agents, reducing the amount of plasticizers, or reducing the iodine values of plasticizers.

The thickness T (mm) of the cap tread in the tire is less than 10.5 mm, preferably 10.0 mm or less, more preferably 9.7 mm or less, still more preferably 9.5 mm or less. The lower limit of the thickness T of the cap tread is preferably 5.0 mm or more, more preferably 6.0 mm or more, still more preferably 7.0 mm or more, further preferably 9.0 mm or more. When the thickness T is within the range indicated above, the advantageous effect tends to be suitably achieved.

Herein, the thickness T of the cap tread refers to the thickness of the cap tread on the tire equator in a radial cross-section of the tire. The thickness Tc is a straight line distance from the surface of the tread (the surface of the cap tread) to the inner face of the cap tread in the tire radial direction in a radial cross-section of the tire.

The thickness of the cap tread on the tire equator is the thicknesses measured along the tire equator from the outermost surface of the cap tread on the tire equator.

In the case where a conducting member or the like is present on the tire equator, the thickness is measured along the tire equator from a straight line connecting the edges of the interface interrupted by the conducting member.

In the case where a groove is present on the tire equator, the thickness is measured at a central portion of a land portion nearest to the tire equator in the tire width direction. The thickness is measured along the normal of the outer surface in the tire radial direction of the cap tread.

The tire desirably has a ratio Lc/T of the amount Lc (% by mass) of the styrene-butadiene rubber having a styrene content of 20% by mass or lower based on 100% by mass of the rubber component in the cap tread rubber composition to the thickness T (mm) of the cap tread of 8.0 or higher.

The ratio Lc/T is preferably 8.2 or higher, more preferably 8.5 or higher, still more preferably 8.7 or higher, further preferably 8.9 or higher. The upper limit of the ratio Lc/T is preferably 12.0 or lower, more preferably 11.0 or lower, still more preferably 10.0 or lower, further preferably 9.4 or lower. When the ratio Lc/T is within the range indicated above, the advantageous effect tends to be better achieved.

The mechanism of the enhancement of the advantageous effect provided by controlling the ratio Lc/T to be a predetermined value or higher, particularly 8.5 or higher is not clear. Presumably, the presence of a sufficient amount of the styrene-butadiene rubber having a low styrene content relative to the thickness of the cap tread reduces the steric hindrance of the styrene unit, thereby increasing cross-linking efficiency. Therefore, energy loss can be further reduced. Thus, presumably, overall performance in terms of fuel economy and abrasion resistance may improve.

The tire desirably has a ratio Fc/T of the amount Fc (parts by mass) of a filler per 100 parts by mass of the rubber component in the cap tread rubber composition to the thickness T (mm) of the cap tread of 7.9 or higher.

The ratio Fc/T is preferably 9.0 or higher, more preferably 9.1 or higher, still more preferably 9.5 or higher, further preferably 10.0 or higher. The upper limit of the ratio Fc/T is preferably 15.0 or lower, more preferably 14.0 or lower, still more preferably 13.0 or lower, further preferably 10.6 or lower. When the ratio Fc/T is within the range indicated above, the advantageous effect tends to be better achieved.

The mechanism of the enhancement of the advantageous effect provided by controlling the ratio Fc/T to be a predetermined value or higher, particularly 9.0 or higher is not clear. Presumably, the presence of a sufficient amount of fillers relative to the thickness of the cap tread can increase elongation, so that abrasion resistance can be improved. Thus, presumably, overall performance in terms of fuel economy and abrasion resistance may improve.

The groove depth D (mm) of a circumferential groove on the tread in the tire is preferably 4.0 mm or more, more preferably 4.5 mm or more, still more preferably 5.0 mm or more, further preferably 5.5 mm or more, further preferably 7.0 mm or more, while it is preferably 8.5 mm or less, more preferably 8.1 mm or less, still more preferably 8.0 mm or less, further preferably 7.5 mm or less. When the groove depth D is within the range indicated above, the advantageous effect tends to be better achieved.

The mechanism of the enhancement of the advantageous effect provided by controlling the groove depth D of a circumferential groove on the tread to be within a predetermined range is not clear. Presumably, the controlled groove depth leads to a good balance between weight reduction and elongation. As a result, presumably, overall performance in terms of fuel economy and abrasion resistance may improve.

The tire desirably has a ratio Lc/D of the amount Lc (% by mass) of the styrene-butadiene rubber having a styrene content of 20% by mass or lower based on 100% by mass of the rubber component to the groove depth D (mm) of a circumferential groove on the tread of 3.0 or higher and 17.0 or lower.

The ratio Lc/D is preferably 8.0 or higher, more preferably 9.0 or higher, still more preferably 10.0 or higher, further preferably 10.5 or higher, further preferably 11.3 or higher, further preferably 12.1 or higher. The upper limit of the ratio Lc/D is preferably 15.0 or lower, more preferably 14.0 or lower, still more preferably 13.0 or lower. When the ratio Lc/D is within the range indicated above, the advantageous effect tends to be better achieved.

The mechanism of the enhancement of the advantageous effect provided by controlling the ratio Lc/D to be within a predetermined range is not clear. Presumably, the controlled groove depth leads to a good balance between weight reduction and elongation, and at the same time, the presence of a sufficient amount of the styrene-butadiene rubber having a low styrene content reduces the steric hindrance of the styrene unit, thereby increasing cross-linking efficiency. Therefore, energy loss can be further reduced. Thus, presumably, overall performance in terms of fuel economy and abrasion resistance may improve.

Herein, the "groove depth D of a circumferential groove" is measured along the normal of a face that is extended from the ground contact face of the outermost surface of a tread and refers to a distance from the face extended from the ground contact face to the bottom of the deepest groove, specifically, the largest distance among the groove depths of existing circumferential grooves.

Herein, the dimensions such as thickness are measured while the width between the bead portions of the tire is fixed to the normal rim width. In the measurement of each dimension, a sample is cut from the tire in the tire radial direction, and the width between the bead edges on both sides of the sample is fixed to the normal rim width.

Herein, the dimensions of the parts of the tire are measured for the tire in the normal state, unless otherwise stated. Herein, the term "normal state" refers to a state where the tire is mounted on a normal rim, inflated to a normal internal pressure, and under no load. The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, such a referenced standard will be followed. For a tire which is not defined by any of the standards, the normal rim refers to a rim with the smallest diameter and, secondly, the narrowest width among the rims on which the tire can be mounted and can maintain the internal pressure, i.e., the rims that cause no air leakage between the rim and the tire. The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. JATMA, ETRTO, and TRA will be referenced in that order, and if the referenced standard includes the applicable size, such a referenced standard will be followed. Moreover, for a tire which is not defined by any of the standards, the normal internal pressure refers to a normal internal pressure of 250 kPa or more for another tire size defined by any of the standards, for which the normal rim is listed as the standard rim. Here, when a plurality of normal internal pressures of 250 kPa or more are listed, the normal internal pressure refers to the smallest one of these normal internal pressures.

An exemplary embodiment of the tire is described below with reference to drawings. The present invention is not limited to the embodiment.

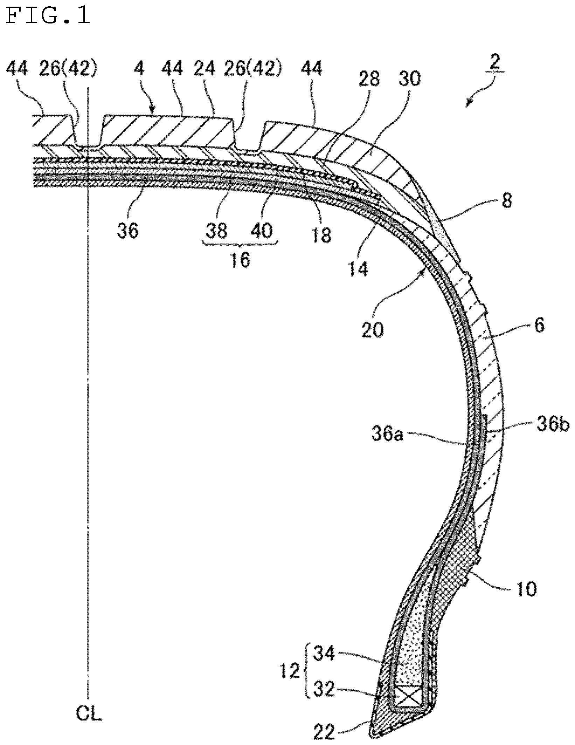

In FIG. 1, the vertical direction corresponds to the radial direction of a tire 2, the horizontal direction corresponds to the axial direction of the tire 2, and the direction perpendicular to the drawing plane corresponds to the circumferential direction of the tire 2. The tire 2 is bilaterally symmetrical. A tread 4 includes a cap layer 30 (cap tread) and a base layer 28 (base tread).

Although FIG. 1 shows an example of the two-layer tread 4 including the cap layer 30 and the base layer 28, the tread may be a monolayer tread or a three or more layer tread.

In the tire 2 in FIG. 1, the cap layer 30 is formed of the above-described cap tread rubber composition. The cap layer 30 contains a rubber component and sulfur. The cap layer 30 contains a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component. The cap layer 30 has a thickness T of less than 10.5 mm. The cap layer 30 has a ratio (SWELL/(Sc × T)) of SWELL (%) of the cap layer 30 to a value of "the amount Sc of the sulfur per 100 parts by mass of the rubber component in the cap layer 30 × the thickness T of the cap layer 30" of 21 or higher.

In the tire 2, each sidewall 6 extends radially substantially inwardly from an edge of the tread 4. The radially outer portion of the sidewall 6 is bonded to the tread 4. The radially inner portion of the sidewall 6 is bonded to a clinch 10. The sidewall 6 can prevent damage to a carcass 14.

In FIG. 1, each wing 8 is located between the tread 4 and the sidewall 6. The wing 8 is bonded to both the tread 4 and the sidewall 6.

Each clinch 10 is located radially substantially inwardly of the sidewall 6 and has at least one part to contact a rim.

The carcass 14 includes a carcass ply 36. Although the carcass 14 in the tire 2 includes one carcass ply 36, it may include two or more carcass plies.

In the tire 2, the carcass ply 36 extends between the bead cores 32 on opposite sides along the tread 4 and the sidewalls 6. The carcass ply 36 is folded around each bead core 32 from the inside to the outside in the axial direction. Due to the folding, the carcass ply 36 is provided with a main portion 36a and a pair of folded portions 36b. Namely, the carcass ply 36 includes the main portion 36a and a pair of the folded portions 36b.

Each bead core 32 includes a bead apex 34 radially outwardly extending from the bead core 32. The bead core 32 has a ring shape and desirably contains a wound non-stretchable wire. The bead apex 34 is radially outwardly tapered.

Though not shown, the carcass ply 36 desirably consists of a large number of parallel cords and a topping rubber. The absolute value of the angle of each cord with respect to the equator CL is suitably from 75° to 90°. In other words, the carcass 14 preferably has a radial structure.

In FIG. 1, a belt layer 16 is located radially inwardly of the tread 4. The belt layer 16 is stacked on the carcass 14. The belt layer 16 reinforces the carcass 14. In the tire 2 in FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times but preferably not more than 0.9 times the cross-sectional width of the tire 2.

The interior layer 38 and the exterior layer 40 each desirably include a parallel array of single-strand steel cords (steel monofilaments) and a topping rubber (coating rubber). In other words, the belt layer 16 contains a parallel array of steel monofilaments.

In FIG. 1, the band 18 is located radially outwardly of the belt layer 16. The band 18 has an axial width that is equal to that of the belt layer 16. The band 18 may have a larger width than the belt layer 16.

Though not shown, the band 18 desirably consists of a cord and a topping rubber. The cord is spirally wound. This band 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The belt layer 16 and the band 18 in FIG. 1 constitute a reinforcing layer. The reinforcing layer may consist only of the belt layer 16.

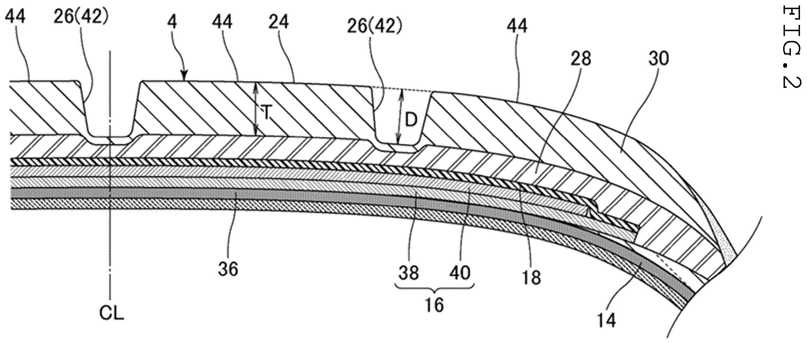

FIG. 2 is an enlarged view showing the tread 4 and its vicinity in FIG. 1.

The tire in FIG. 2 is the tire 2 having a groove 26 on the tire equator (on CL).

In this tire, the thickness (T) of the cap tread is measured at a central portion of a land portion nearest to the groove 26 on the tire equator in the tire width direction in a radial cross-section of the tire. The thickness is measured along the normal of the surface of the cap layer 30 (cap tread). Specifically, the thickness is a straight line distance from the outer surface of the cap layer 30 in the tire radial direction to an interface, which is on the outermost surface side of the tire, of the base layer 28 in the normal direction.

An innerliner 20 is located inwardly of the carcass 14. The innerliner 20 is bonded to the inner surface of the carcass 14. A typical substrate rubber of the innerliner 20 is butyl rubber or a halogenated butyl rubber. The innerliner 20 maintains the inner pressure of the tire 20.

Each chafer 22 is located near the bead 12. In this embodiment, the chafer 22 desirably consists of a rubber and a fabric impregnated with the rubber. The chafer 22 may be integrated with the clinch 10.

In the tire 2, the tread 4 has main grooves 42 as grooves 26. As shown in FIG. 1, the tread 4 has a plurality of, specifically three, main grooves 42 engraved thereon. The main grooves 42 are spaced apart in the axis direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

In FIG. 2, D represents the groove depth of the main circumferential groove 42 on the tread 4.

In the tire 2, the amount Sc (parts by mass) of the sulfur per 100 parts by mass of the rubber component in the cap layer 30, the amount Lc (% by mass) of the styrene-butadiene rubber having a styrene content of 20% by mass or lower based on 100% by mass of the rubber component in the cap layer 30, the amount Fc (parts by mass) of a filler per 100 parts by mass of the rubber component in the cap layer 30, the thickness T (mm) of the cap layer 30, and the groove depth D of a circumferential groove on the tread desirably give the ratios Lc/T, Fc/T, and Lc/D, and the T and the D within the respective ranges indicated above.

### EXAMPLES

Examples (working examples) which are considered preferable to implement the present invention are described below although the scope of the disclosure is not limited to the examples.

Chemicals used in the production of a tire are listed below. If necessary, the chemicals are purified by usual techniques.
SBR 1: modified SBR (Production Example 1 below, styrene content: 35% by mass, vinyl content: 50% by mass, Mw: 700000)
SBR 2: modified SBR (Production Example 2 below, styrene content: 10% by mass, vinyl content: 40% by mass, Mw: 700000)
SBR 3: modified SBR (Production Example 3 below, styrene content: 20% by mass, vinyl content: 20% by mass, Mw: 700000)
BR: BR150B (cis content: 97% by mass) available from UBE Corporation
Silica: ULTRASIL VN3 (N₂SA: 175 m²/g) available from Degussa
Carbon black: N220 (N₂SA: 114 m²/g, DBP: 100 ml/100 g) available from Mitsubishi Chemical Corporation
Silane coupling agent: NXT (3-octanoylthio-1-propylethoxysilane) available from Momentive
Resin: Sylvatraxx4401 (a copolymer of α-methylstyrene and styrene, softening point: 85°C) available from Arizona Chemical
Oil: NC300 available from ENEOS Corporation
Zinc oxide: Ginrei R available from Toho Zinc Co., Ltd.
Antioxidant: Antigen 6C (N-phenyl-N'-(1,3-dimethylbuthyl)-p-phenylenediamine) available from Sumitomo Chemical Co., Ltd.
Wax: SUNNOC wax available from Ouchi Shinko Chemical Industrial Co., Ltd.
Stearic acid: stearic acid "KIRI" available from NOF Corporation
Sulfur: powdered sulfur available from Tsurumi Chemical Industry Co., Ltd.
Organic peroxide 1: PERCUMYL D (dicumyl peroxide available from Ouchi Shinko Chemical Industrial Co., Ltd.)
Organic peroxide 2: PEROYL TCP (bis(4-tert-butylcyclohexyl) peroxydicarbonate available from NOF Corporation)
Vulcanization accelerator CZ: NOCCELER CZ (N-cyclohexyl-2-benzothiazolylsulfenamide) available from Ouchi Shinko Chemical Industrial Co., Ltd.
Vulcanization accelerator DPG: NOCCELER D (N,N'-diphenylguanidine) available from Ouchi Shinko Chemical Industrial Co., Ltd.
Vulcanization accelerator TBzTD: Sanceler TBzTD (tetrabenzylthiuram disulfide) available from Sanshin Chemical Industry Co., Ltd.

### (Production Example 1)

A nitrogen-purged autoclave reactor is charged with hexane, 1,3-butadiene, styrene, tetrahydrofuran, and ethylene glycol diethyl ether. Next, bis(diethylamino)-methylvinylsilane and n-butyllithium are added as a solution in cyclohexane and a solution in n-hexane, respectively, to start polymerization.

The copolymerization of 1,3-butadiene and styrene is carried out for three hours at a stirring rate of 130 rpm and a temperature inside the reactor of 65°C while continuously feeding the monomers into the reactor. The polymer solution thus prepared is then stirred at a stirring rate of 130 rpm, and N-(3-dimethylaminopropyl)acrylamide is added, followed by a reaction for 15 minutes. After completion of the polymerization, 2,6-di-tert-butyl-p-cresol is added to the reaction mixture, followed by removing the solvent by steam stripping. The resulting product is dried on hot rolls adjusted at 110°C to obtain a modified styrene-butadiene rubber (SBR 1).

### (Production Example 2)

A nitrogen-purged autoclave reactor is charged with cyclohexane, tetrahydrofuran, styrene, and 1,3-butadiene. The temperature of the contents in the reactor is adjusted to 20°C, and then n-butyllithium is added to start polymerization. The polymerization is carried out under adiabatic conditions, and the maximum temperature reaches 85°C. Once the polymerization conversion rate reaches 99%, butadiene is added, followed by further polymerization for five minutes. Then, 3-dimethylaminopropyltrimethoxysilane is added as a modifier, followed by a reaction for 15 minutes. After completion of the polymerization, 2,6-di-tert-butyl-p-cresol is added to the reaction mixture, followed by removing the solvent by steam stripping. The resulting product is dried on hot rolls adjusted at 110°C to obtain a modified styrene-butadiene rubber (SBR 2).

### (Production Example 3)

A nitrogen-purged autoclave reactor is charged with cyclohexane, tetrahydrofuran, styrene, and 1,3-butadiene. The temperature of the contents in the reactor is controlled, and then n-butyllithium is added to start polymerization. The polymerization is carried out under adiabatic conditions. Upon reaching 99% polymerization conversion rate, 1,3-butadiene is added, followed by further polymerization. Then, N-(3-dimethylaminopropyl) acrylamide is added as a modifier to conduct a reaction. After completion of the polymerization, 2,6-di-tert-butyl-p-cresol is added to the reaction mixture, followed by removing the solvent by steam stripping. The resulting product is dried on hot rolls to obtain a modified styrene-butadiene rubber (SBR 3).

### <Production of test tire>

According to the formulation in Table 1, the materials other than the sulfur and the vulcanization accelerator are kneaded in a 1.7 L Banbury mixer (Kobe Steel, Ltd.) at 150°C for five minutes to obtain a kneaded mixture.

The sulfur and the vulcanization accelerator are added to the kneaded mixture, and they are kneaded using an open roll mill at 80°C for five minutes to obtain an unvulcanized rubber composition.

The unvulcanized rubber composition is formed into the shape of a cap tread and is then assembled with other tire components on a tire building machine to build an unvulcanized tire. The unvulcanized tire is vulcanized at 170°C for 10 minutes, whereby a test tire (size 205/70R15, a passenger car tire) is produced.

Test tires prepared according to the amounts and the specifications varied as shown in Table 1 are simulated. Table 1 shows the results calculated as described in the evaluation methods below.

The reference comparative examples are as follows.

### Table 1: Comparative Example 7 for abrasion resistance and Comparative Example 8 for fuel economy

### <SWELL>

A measurement sample (1 × 1 cm, thickness: 2 mm) is prepared from the cap tread of the test tire. The sample is immersed in toluene at 25°C for 24 hours to measure a volume change (SWELL (%)) between before and after the immersion. The SWELL is usable to evaluate the cross-linking density of the measurement sample as a whole. A smaller SWELL indicates a higher cross-linking density.

### <Fuel economy>

The rolling resistance of the test tire with an inner pressure of 230 kPa during driving at 80 km/h is measured using a rolling resistance tester. The measured value is expressed as an index relative to the value of the reference comparative example taken as 100. A higher index indicates better fuel economy.

### <Abrasion resistance>

A set of test tires is mounted on a vehicle, and the depth of a groove on the tread is measured after the vehicle runs 8000 km. Then, the running distance at which the groove depth decreases by 1 mm is calculated and expressed as an index using the equation below. A higher index indicates better abrasion resistance. (Abrasion resistance index) = (Distance at which groove depth decreases by 1 mm in each formulation example)/(Distance at which groove depth decreases by 1 mm in reference comparative example) × 100

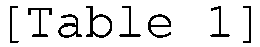

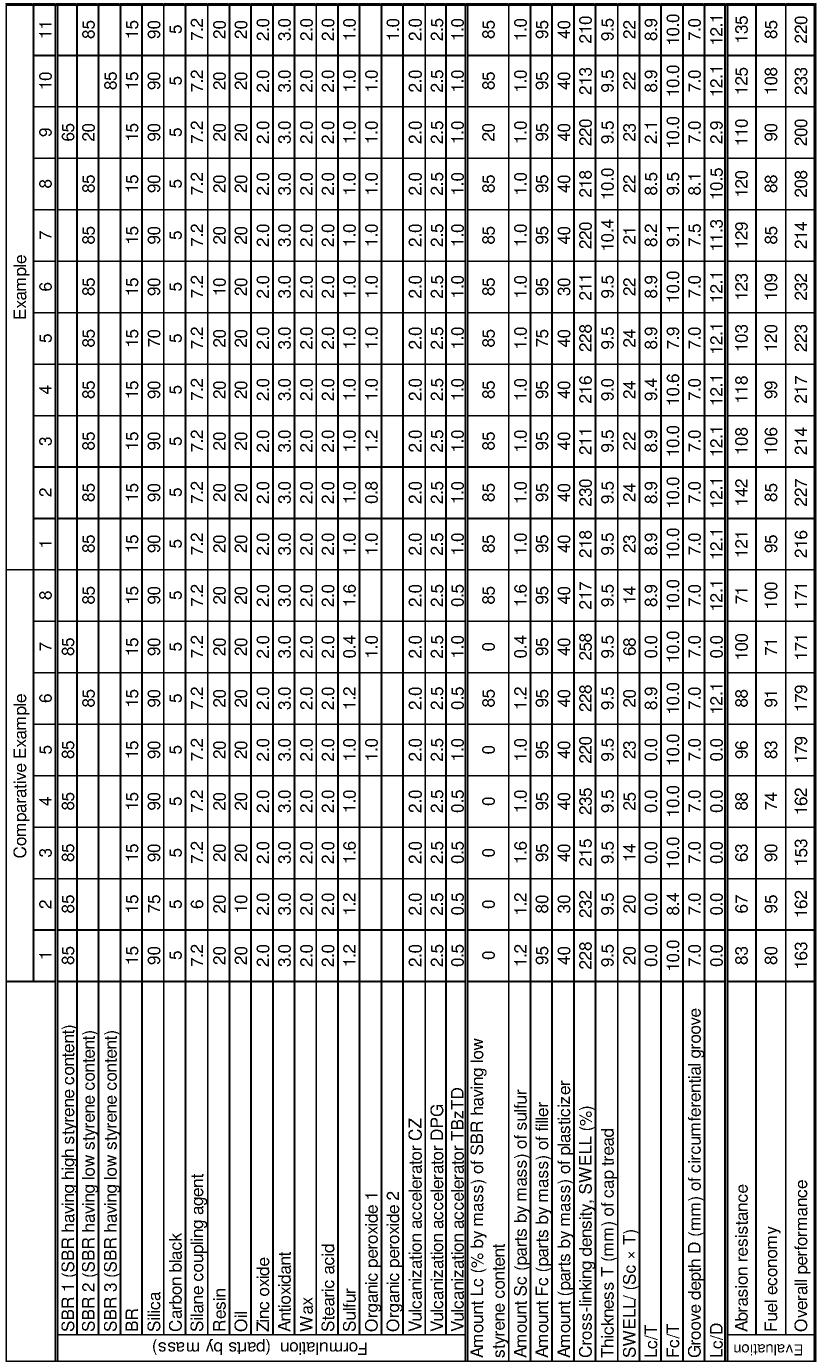

Exemplary embodiments of the present invention include the following.

Embodiment 1. A tire, including a cap tread containing a rubber component and sulfur,
the cap tread containing a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component,
the cap tread having a thickness T of less than 10.5 mm,
the cap tread having a ratio (SWELL/(Sc × T)) of SWELL (%) of the cap tread to a value of "the amount Sc (parts by mass) of the sulfur per 100 parts by mass of the rubber component × the thickness T (mm) of the cap tread" of 21 or higher.

Embodiment 2. The tire according to the embodiment 1, wherein the cap tread contains an organic peroxide.

Embodiment 3. The tire according to the embodiment 1 or 2,
wherein the cap tread contains a filler in an amount Fc of 90 parts by mass or more per 100 parts by mass of the rubber component.

Embodiment 4. The tire according to any combination with any one of the embodiments 1 to 3,
wherein the cap tread contains silica in an amount of 80 parts by mass or more per 100 parts by mass of the rubber component.

Embodiment 5. The tire according to any combination with any one of the embodiments 1 to 4,
wherein the cap tread contains a plasticizer in an amount of 35 parts by mass or more per 100 parts by mass of the rubber component.

Embodiment 6. The tire according to any combination with any one of the embodiments 1 to 5,
wherein the cap tread has a ratio (Lc/T) of the amount Lc (% by mass) of the styrene-butadiene rubber having a styrene content of 20% by mass or lower based on 100% by mass of the rubber component to the thickness T (mm) of the cap tread of 8.5 or higher.

Embodiment 7. The tire according to any combination with any one of the embodiments 1 to 6,
wherein the cap tread has a ratio (Fc/T) of the amount Fc (parts by mass) of a filler per 100 parts by mass of the rubber component to the thickness T (mm) of the cap tread of 9.0 or higher.

Embodiment 8. The tire according to any combination with any one of the embodiments 1 to 7,
wherein the tread has a circumferential groove having a groove depth D of 4.0 mm or more and 8.5 mm or less.

Embodiment 9. The tire according to any combination with any one of the embodiments 1 to 8,
wherein the cap tread has a ratio (Lc/D) of the amount Lc (% by mass) of the styrene-butadiene rubber having a styrene content of 20% by mass or lower based on 100% by mass of the rubber component to the groove depth D (mm) of a circumferential groove on the tread of 3.0 or higher and 17.0 or lower.

Embodiment 10. The tire according to any combination with any one of the embodiments 1 to 9,
wherein the cap tread contains the styrene-butadiene rubber having a styrene content of 20% by mass or lower in an amount Lc of 70% by mass or more based on 100% by mass of the rubber component.

Embodiment 11. The tire according to any combination with any one of the embodiments 1 to 10,
wherein the thickness T (mm) of the cap tread is 9.7 mm or less.

Embodiment 12. The tire according to any combination with any one of the embodiments 1 to 11,
wherein the cap tread contains a resin.

Embodiment 13. The tire according to any combination with any one of the embodiments 1 to 12,
wherein the SWELL of the cap tread is 200% to 250%.

### REFERENCE SIGNS LIST

2 tire
4 tread
6 sidewall
8 wing
10 clinch
12 bead
14 carcass
16 belt layer
18 band
20 innerliner
22 chafer
24 tread surface
26 groove
28 base layer
30 cap layer
32 bead core
34 bead apex
36 carcass ply
36a main portion
36b folded portion
38 interior layer
40 exterior layer
42 main groove
44 rib
CL tire equator
Tc thickness of cap tread
D main groove depth of main circumferential groove on tread

## Claims

1. A tire, comprising a cap tread containing a rubber component and sulfur,
the cap tread containing a styrene-butadiene rubber having a styrene content of 20% by mass or lower in an amount Lc of 5% by mass or more and 100% by mass or less based on 100% by mass of the rubber component and the sulfur in an amount Sc of 0.5 parts by mass or more and 1.5 parts by mass or less per 100 parts by mass of the rubber component,
the cap tread having a thickness T of less than 10.5 mm,
the cap tread having a ratio (SWELL/(Sc × T)) of SWELL (%) of the cap tread to a value of "the amount Sc (parts by mass) of the sulfur per 100 parts by mass of the rubber component × the thickness T (mm) of the cap tread" of 21 or higher.

2. The tire according to claim 1,
wherein the cap tread contains an organic peroxide.

3. The tire according to claim 1 or 2,
wherein the cap tread contains a filler in an amount Fc of 90 parts by mass or more per 100 parts by mass of the rubber component.

4. The tire according to any one of claims 1 to 3,
wherein the cap tread contains silica in an amount of 80 parts by mass or more per 100 parts by mass of the rubber component.

5. The tire according to any one of claims 1 to 4,
wherein the cap tread contains a plasticizer in an amount of 35 parts by mass or more per 100 parts by mass of the rubber component.

6. The tire according to any one of claims 1 to 5,
wherein the cap tread has a ratio (Lc/T) of the amount Lc (% by mass) of the styrene-butadiene rubber having a styrene content of 20% by mass or lower based on 100% by mass of the rubber component to the thickness T (mm) of the cap tread of 8.5 or higher.

7. The tire according to any one of claims 1 to 6,
wherein the cap tread has a ratio (Fc/T) of the amount Fc (parts by mass) of a filler per 100 parts by mass of the rubber component to the thickness T (mm) of the cap tread of 9.0 or higher.

8. The tire according to any one of claims 1 to 7,
wherein the tread has a circumferential groove having a groove depth D of 4.0 mm or more and 8.5 mm or less.

9. The tire according to any one of claims 1 to 8,
wherein the cap tread has a ratio (Lc/D) of the amount Lc (% by mass) of the styrene-butadiene rubber having a styrene content of 20% by mass or lower based on 100% by mass of the rubber component to the groove depth D (mm) of a circumferential groove on the tread of 3.0 or higher and 17.0 or lower.

10. The tire according to any one of claims 1 to 9,
wherein the cap tread contains the styrene-butadiene rubber having a styrene content of 20% by mass or lower in an amount Lc of 70% by mass or more based on 100% by mass of the rubber component.

11. The tire according to any one of claims 1 to 10,
wherein the thickness T (mm) of the cap tread is 9.7 mm or less.

12. The tire according to any one of claims 1 to 11,
wherein the cap tread contains a resin.

13. The tire according to any one of claims 1 to 12,
wherein the SWELL of the cap tread is 200% to 250%.
